# EUROPEAN PATENT APPLICATION

(11) **EP 2 857 988 A1**
(43) Date of publication of application: **08.04.2015**
(21) Application number: 13187191.5
(22) Date of filing: 02.10.2013
(51) Int. Cl.: G06F 17/30

(54) **Media content management**

(71) Applicant: Nokia Technologies OY, 02610 Espoo (FI)
(72) Inventor: Lehtiniemi, Arto Juhani, 33880 Lempäälä (FI); Leppänen, Jussi Artturi, 33580 Tampere (FI); Eronen, Antti Johannes, 33820 Tampere (FI)
(74) Representative: Swindell & Pearson Limited

(57) **Abstract**

A method comprising: causing display of a first list of media content items to a user, wherein the first list is ordered according to progression of a first one of a plurality of parameters that parameterize media content items; enabling user selection of at least a first media content item from the displayed first list of media content items; causing display of a second list of media content items to the user, in response to user selection of the first media content item, wherein the second list is ordered according to progression of a second one of the plurality of parameters that parameterize media content items; enabling user selection of at least a second media content item from the displayed second list of media content items; and enabling creation of a playlist of media content items dependent upon at least a user selected first media content item and a user selected second media content item.

## Description

### TECHNOLOGICAL FIELD

Embodiments of the present invention relate to media content management. The present application further relates to generating a playlist of media content items.

### BACKGROUND

A media content item is an item of media content. Media content items include items that communicate to a human via the human's senses. Examples of media content items include audio tracks, videos, games, books, web-pages, articles, etc.

An electronic device may be configured to render media content items, such as audio tracks, in a particular order (a playlist).

### BRIEF SUMMARY

According to various, but not necessarily all, embodiments of the invention there is provided a method comprising: causing display of a first list of media content items to a user, wherein the first list is ordered according to progression of a first one of a plurality of parameters that parameterize media content items; enabling user selection of at least a first media content item from the displayed first list of media content items; causing display of a second list of media content items to the user, in response to user selection of the first media content item, wherein the second list is ordered according to progression of a second one of the plurality of parameters that parameterize media content items; enabling user selection of at least a second media content item from the displayed second list of media content items; and enabling creation of a playlist of media content items dependent upon at least a user selected first media content item and a user selected second media content item.

According to various, but not necessarily all, embodiments of the invention there is provided an apparatus, comprising: means for causing display of a first list of media content items to a user, wherein the first list is ordered according to progression of a first one of a plurality of parameters that parameterize media content items; means for enabling user selection of at least a first media content item from the displayed first list of media content items; means for causing display of a second list of media content items to the user wherein the second list is ordered according to progression of a second one of the plurality of parameters that parameterize media content items; means for enabling user selection of at least a second media content item from the displayed second list of media content items; and means for enabling creation of a playlist of media content items dependent upon at least a user selected first media content item and a user selected second media content item.

According to various, but not necessarily all, embodiments of the invention there is provided an apparatus, comprising: at least one processor; and memory storing computer program code configured, working with the at least one processor, to cause at least the following to be performed: causing display of a first list of media content items to a user, wherein the first list is ordered according to progression of a first one of a plurality of parameters that parameterize media content items; enabling user selection of at least a first media content item from the displayed first list of media content items; in response to user selection of the first media content item, causing display of a second list of media content items to the user, wherein the second list is ordered according to progression of a second one of the plurality of parameters that parameterize media content items; enabling user selection of at least a second media content item from the displayed second list of media content items; enabling creation of a playlist of media content items dependent upon at least a selected first media content item and a selected second media content item.

According to various, but not necessarily all, embodiments of the invention there is provided a computer program which when run by a computer enables: causing display of a first list of media content items to a user, wherein the first list is ordered according to progression of a first one of a plurality of parameters that parameterize media content items; enabling user selection of at least a first media content item from the displayed first list of media content items; causing display of a second list of media content items to the user, in response to user selection of the first media content item, wherein the second list is ordered according to progression of a second one of the plurality of parameters that parameterize media content items; enabling user selection of at least a second media content item from the displayed second list of media content items; and enabling creation of a playlist of media content items dependent upon at least a user selected first media content item and a user selected second media content item.

### BRIEF DESCRIPTION

For a better understanding of various examples that are useful for understanding the brief description, reference will now be made by way of example only to the accompanying drawings in which:
Figs. 1, 2 and 3 illustrate examples of a media content management system;
Fig. 4 illustrates a parameter space spanned by parameters that parameterize media content items;
Fig. 5 illustrates an example of a playlist generator;
Fig. 6 illustrates an example of a playlist seed generator;
Fig. 7A and 7B illustrate examples of where the playlist seed generator may be located;
Fig. 8A illustrates an example of an apparatus;
Fig. 8B illustrates an example of a delivery mechanism for the transfer of computer program code;
Fig. 8C illustrates an example of a delivery mechanism for the transfer of a playlist seed;
Fig. 9 illustrates an example of a method for enabling playlist generation;
Fig. 10 illustrates an example of user device;
Figs. 11A to 11G illustrate content displayed on the user interface of the user device;
Fig. 12 illustrates an example of a data structure defining a playlist seed; and
Fig. 13 illustrates an example of a visual representation of playlist seed.

### DETAILED DESCRIPTION

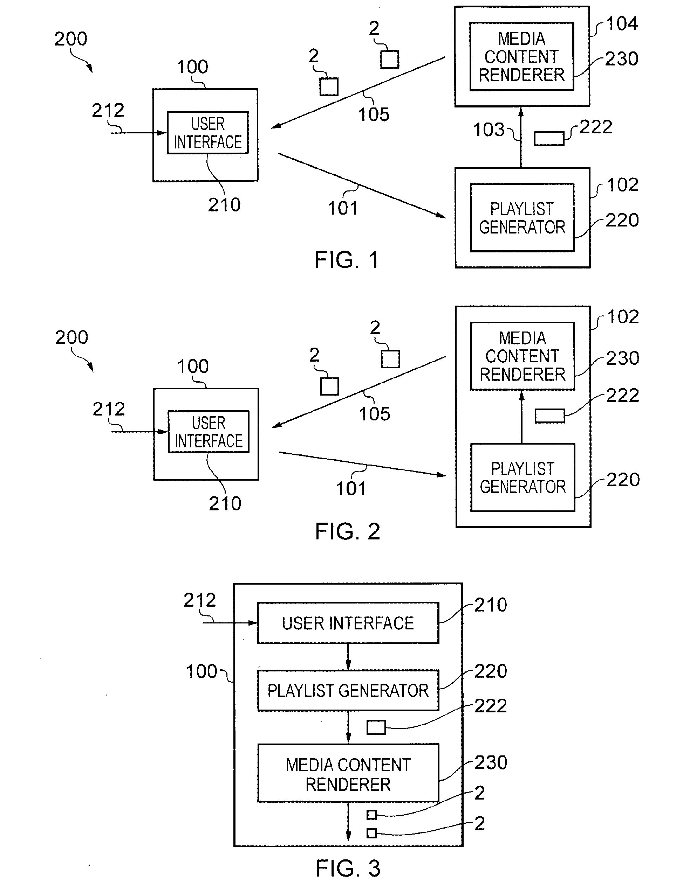

Figs. 1, 2 and 3 illustrate example of a media content management system 200.

The system 200 comprises a user interface 210, a playlist generator 220, and a media content renderer 230.

The user interface 210 is configured to enable a user to provide user commands 212 to the system 200.

The playlist generator 220 is configured to generate a playlist 222 of media content items.

A playlist 222 is a data structure that controls at least what media content items 2 are rendered and in which order they are rendered.

The media content renderer 230 is configured to cause rendering of the media content items 2.

As an example, the media content items 2 may be audio tracks and the media content renderer 230 may stream the audio tracks 2 for playback via the user interface 210.

In the example of Fig. 1, the media content management system 200 comprises a user device 100, a first network device 102 and a second network device 104. In this example, the user device 100 is configured to provide the user interface 210, the first network device 102 is configured to provide the playlist generator 220 and the second network device 104 is configured to provide the media content renderer 230.

The user device 100 communicates 101 with the remote first network device 102 to enable the first network device to generate a playlist 222 which is sent 103 to the second network device 104. The second network device 102 sends 105 media content items 2, as defined by the playlist 222, to the user device 100 where they are consumed by the user of the user device 102.

Fig. 2 illustrates an alternative architecture for the media content management system 200. In the example of Fig. 2, the media content management system 200 comprises a user device 100, and a first network device 102. In this example, the user device 100 is configured to provide the user interface 210 and the first network device 102 is configured to provide the playlist generator 220 and the media content renderer 230.

The user device 100 communicates 101 with the first network device 102 to enable the first network device 102 to generate a playlist 222. The first network device 102 sends 105 media content items 2, as defined by the playlist 222, to the user device 100 where they are consumed by the user of the user device 100.

Fig. 3 illustrates an alternative architecture for the media content management system 200. In the example of Fig. 3, a user device 100 comprises the media content management system 200. In this example, the user device 100 is configured to provide the user interface 210, the playlist generator 220 and the media content renderer 230.

The user device 100 generates a playlist 222. The user device 100 streams locally stored media content items 2, as defined by the playlist 222, for consumption by the user of the user device 100.

A collection of media content items 2 may be considered to populate a vector space spanned by a plurality of N parameters p1, p2....pN. The position of a media content item 2 within the vector space may be specified by a co-ordinate that specifies a value of each of the parameters.

Generating a playlist 222 may be restated as defining a desired sub-space within the vector space.

A playlist may be independent of some parameters and dependent upon other parameters.

The playlist may then be defined by specifying the dependent parameters that define the sub-space and the range of values of the dependent parameters that define the sub-space.

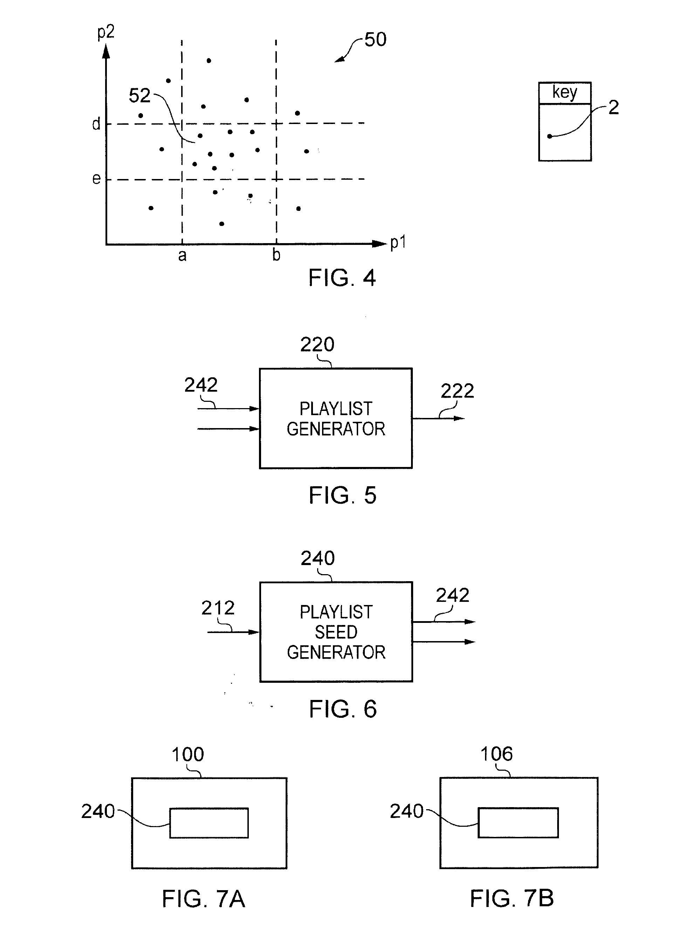

In an example illustrated in Fig. 4, a vector space 50 is spanned by dependent parameters p1 and p2. The media content items 2 are illustrated by dots. The playlist 222 is defined by the media content items 2 within the sub-space 52. The definition of the sub-space 52 may be used as a seed for the generation of a playlist 222.

The sub-space 52 may be defined by specifying the parameters p1 and p2 and specifying the range for each parameter.

A range may be single ended e.g. a<p1 or dual ended e.g. a<p1 <b.

A range for a parameter specifies what is an allowed value for that parameter within the sub-space 52 and also what is not an allowed value of the parameter within the sub-space 52.

A range for a parameter may be specified explicitly by specifying values for the limits of the range or may be specified implicitly by identifying examples of media content items 2.

The definition of the sub-space 52 using a set of parameters and a range for the parameters may be used as a seed for the generation of a playlist 222. The playlist 222 is generated by identifying all or some of the media content items 2 that lie within the defined sub-space 52.

Fig. 5 illustrates an example of a playlist generator 220. In this example, it creates, as a direct product, a playlist 222.

The playlist generator 220 receives as an input a playlist seed 242 and produces as an output a playlist 222.

The playlist seed 242 defines a sub-space 52 within which the media content items 2 in the playlist 222 lie.

The playlist seed 242 may in some examples define the sub-space 52 by defining the dependent parameters that span the sub-space 52 and also define the range of values of those parameters. In this example, the sub-space 52 may have a clearly demarcated boundary.

The playlist seed 242 may in other examples define the sub-space 52 by defining the dependent parameters that span the sub-space 52 and identify media content items 2 that lie within the sub-space 52 and media content items 2 that lie outside the sub-space 52. In this example, the boundaries of the sub-space 52 may be fuzzy.

Media content items 2 may be associated with a weighting for a parameter. A positive weighting for a parameter may indicate that an associated media content item 2 lies within the sub-space 52 along the direction of that parameter. A negative weighting for a parameter may indicate that an associated media content item 2 lies outside the sub-space 52 along the direction of that parameter. A positive weighting for a parameter may have a different magnitude, with higher values being located towards a center of the sub-space 52 and lower values being located away from the center of the sub-space. A negative weighting for a parameter may have a different magnitude, with higher values being located outside the sub-space 52 and lower values being located at or near the boundary of sub-space 52.

The probability of selection of a media content items 2 for inclusion within the playlist may be dependent upon the cumulative weightings for the parameters in the region of the sub-space 52 occupied by the media content item. A cumulative weighting may, for example, be a sum or product of the weightings for the individual parameters.

Fig. 6 illustrates an example of a playlist seed generator 240.

The playlist seed generator 240 is configured to receive user input commands 212 from the user interface 210 and is configured to generate, as a direct product, a playlist seed 242.

The user input commands 212 are used to specify whether a particular media content item 2 lies inside or outside the sub-space 52 in the direction of a particular parameter (as opposed to generally). That is whether, for a particular parameter, the media content item 2 is indicative of media content items 2 that should be included or excluded from the playlist 222.

As illustrated in Fig. 7A, the playlist seed generator 240 may be located within the user device 100.

As illustrated in Fig. 7B, the playlist seed generator 240 may be located within a network device 106. The network device 106 may, for example, be the first network device 102 or a different network device.

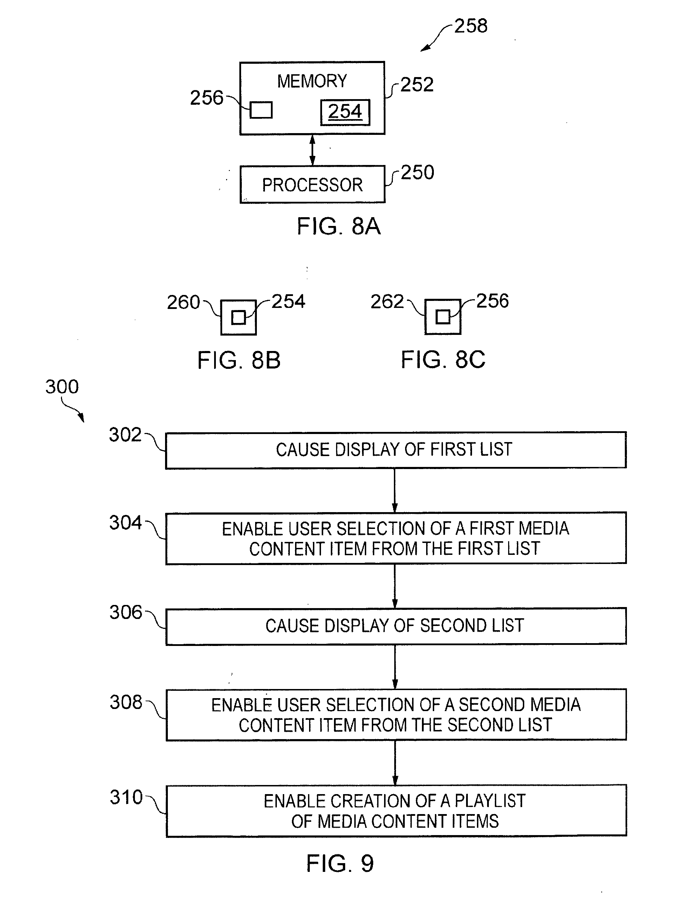

Fig. 8A illustrates an apparatus 258 that may be a chip or a chipset or processing circuitry. The apparatus 258 may form part of an electronic device such as the user device 100 or a network device, as illustrated in Figs. 1 to 3.

The apparatus 258 comprises at least one processor 250 and at least one memory 252. A single processor 250 and a single memory 250 are shown in Fig. 8A for illustrative purposes.

The processor 250 is configured to read from and write to the memory 252. The processor 250 may comprise an output interface via which data and/or commands are output by the processor 250 and an input interface via which data and/or commands are input to the processor 250.

The memory 252 stores a computer program 254 comprising computer program instructions/code that control the operation of the apparatus 258 when loaded into the processor 250. The computer program code 254 provides the logic and routines that enables the apparatus 252 to perform the method illustrated in Fig. 9. The processor 250, by reading the memory 252, is able to load and execute the computer program code 254.

The memory 252 is also configured to store one or more data structures 256. Data structures 256 may, for example, be used to record and/or transfer: user input commands 212, playlist seeds 242, playlists 222, media content items 2.

Although the memory 252 is illustrated as a single component it may be implemented as one or more separate components some or all of which may be integrated/removable and/or may provide permanent/semi-permanent/dynamic/cached storage.

Although the processor 250 is illustrated as a single component it may be implemented as one or more separate components.

Referring to Fig. 8B, the computer program code 254 may arrive at the apparatus 258 via any suitable delivery mechanism 260. The delivery mechanism 260 may be, for example, a non-transitory computer-readable storage medium such as, for example, an optically readable disc, for example, a compact disc read-only memory (CD-ROM) or digital versatile disc (DVD), or a Blue-ray ™ disc (BD). The delivery mechanism 260 may be a signal configured to reliably transfer the computer program code 254. The apparatus 258 may cause the propagation or transmission of the computer program code 254 as a computer data signal.

Referring to Fig. 8C, one or more data structures 256 may be transferred to/from the apparatus 258 via any suitable delivery mechanism 262. The delivery mechanism 262 may be, for example, a non-transitory computer-readable storage medium such as, for example, an optically readable disc, for example, a compact disc read-only memory (CD-ROM), a digital versatile disc (DVD), or a Blue-ray™ disc (BD). The delivery mechanism 262 may be a signal configured to reliably transfer the data structure(s) 256. The apparatus 258 may cause the propagation or transmission of the data structure(s) 256 as a computer data signal.

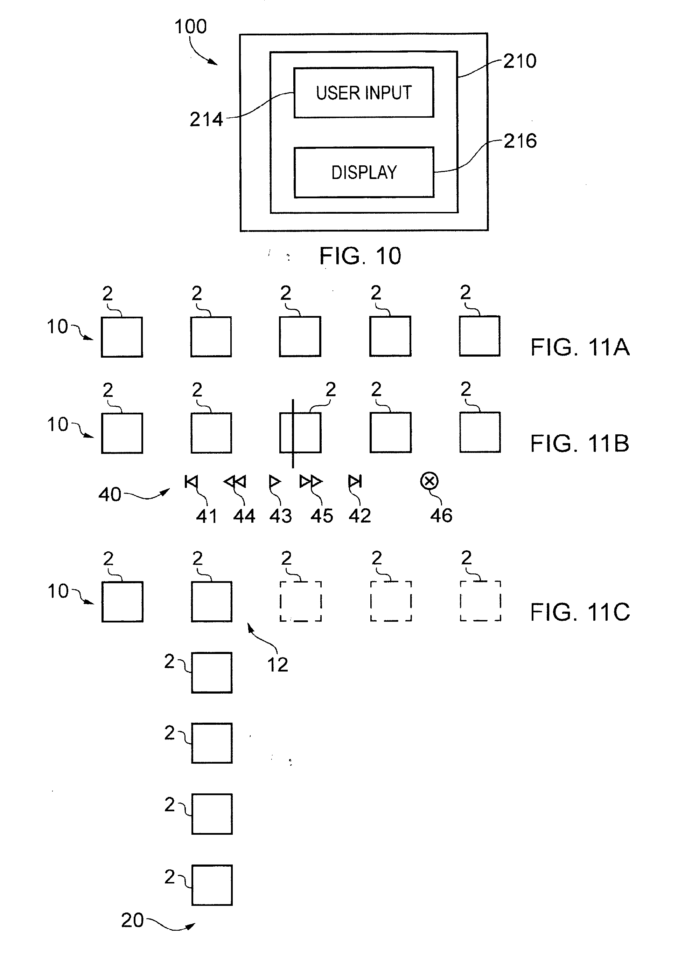

Fig. 10 illustrates an example of a user device 100.

The electronic user device 100 may be a self-contained electronic device or may be a module for a larger apparatus, such as for example, a refrigerator, a vehicle, a media system, a juke-box, a computer etc. Examples of vehicles include but are not limited to car, coach, train, boat and airplane.

The electronic user device 100 is usable by a user. In some but not necessarily all examples, the electronic user device 100 is a personal electronic user device 100 that is used by a single user. Access to such a personal electronic user device 100 may be controlled or controllable by a user authentication process, which will typically require confirmation of a user-controlled token such as a password, biometric, key, smart card etc. In other examples, the electronic user device 100 may be a shared electronic user device 100 that is shared by multiple users.

In some but not necessarily all examples, the electronic user device 100 may, for example, be a hand portable electronic device such as a mobile telephone, a tablet computer, a games console or a media player. A hand-portable device is a device that can be carried by a human-hand. In other examples, the user electronic device 100 may be a mobile device. A mobile device is a device that can be moved and still perform its function. It may have but does not necessarily have a self-contained power supply. In still other examples, the user electronic device 100 may be a fixed device. A fixed device is a device that is permanently or semi-permanently located. It may be but is not necessarily integrated with other apparatus or services.

The example of the electronic device 100 illustrated in Fig. 10 comprises a display 216 and a user input device 214. These may, for example, be combined as a touch sensitive display.

An example of a method 300 for enabling creation of a playlist 222 will now be described with reference to Fig. 9 and also Figs. 11A to 11G.

The method 300 may be performed at a user device 100 or at a network device, for example, the first network device 102 which causes events at the user device 100.

Figs. 11A to 11G illustrate content displayed on the display 216 of the user interface 210 of the user device 100.

In the examples of Figs. 11A to 11G distinct media content items 2 are represented by distinct graphical representations e.g. icons. A list of media content items 2 is represented by a straight line of the corresponding graphical representations.

At block 302 of the method 300, the apparatus 258 causes display at the user device 100 of a first list 10 of media content items 2 as illustrated in Fig. 11A.

The first list 10 is ordered (in this example from left to right in Fig. 11A) according to progression of a first parameter that parameterizes media content items 2.

At block 304 of the method 300, the apparatus 258 enables user selection of at least a first media content item 12 from the displayed first list 10 of media content items 2.

For example, as illustrated in Fig. 11B, a user is able to use controls 40 to select a first media content item 12 from the displayed first list 10 of media content items 2.

In some but not necessarily all examples, a user is able to use controls 40 to play different ones of the media content items 2 within the first list 10 as part of a process selecting the first media content item 12. In other examples, selection may occur without playing media content items 2.

In some but not necessarily all examples, controls 40 comprise multiple controls. One example of multiple controls is illustrated in Fig 11B. A skip-back control 41 allows a user to select a preceding media content item 2 in the first list. A skip-forward control 42 allows a user to select a next media content item 2 in the first list 10. A play control 43 allows a user to play the currently selected media content item 2. A scroll-back control 44 allows a user to rewind a currently playing media content item 2 and a scroll-forward command 45 allows a user to fast forward a currently playing media content item 2.

A judgment control 46 is also provided. In this example, the judgment control 46 is a reject control. The user selects this reject control 46, while a media content item 2 is playing, to indicate that the currently playing media content item 2 is a rejected media content item 2 and the user does not wish this rejected media content item 2 (and/or media content items 2 with a similar first parameter value to it ) to be in a desired playlist 222. That is, the selection is used to define, in the direction of the first parameter, the sub-space 52 defining the desired playlist 222. The sub-space 52 may include media content item 2 in the first list 10 that have not been rejected and may exclude media content item 2 in the first list 10 that have been rejected. Additionally or alternatively, a judgment control 46 may be provided as an approval control. The user selects this approval control 46, while a media content item 2 is playing, to indicate that the currently playing media content item 2 is an accepted media content item 2 and the user does wish this accepted media content item 2 (and/or media content items 2 with a similar first parameter value to it ) to be in a desired playlist 222. That is, the selection is used to define, in the direction of the first parameter, the sub-space 52 defining the desired playlist 222. The sub-space 52 may include media content item 2 in the first list 10 that have been accepted and may exclude media content item 2 in the first list 10 that have not been accepted.

The last media content item 2 in the first list 10 that is not rejected and/or that is approved is a first boundary media content item 12. The first boundary media content item 12 is a specific example of the previously described first media content item 12. It represents an internal boundary of the sub-space 52 defining the desired playlist 222 along the direction of the first parameter.

Next in response to user selection of at least a first media item 12, for example, using the reject control 46, at block 306 of the method 300, the apparatus 258 automatically causes display, at the user device 100, of a second list 20 of media content items 2.

The second list 20 is ordered according to progression of a second parameter that parameterizes media content items 2. The second parameter is different to the first parameter.

In the example of Fig. 11C, the second list 20 is displayed simultaneously with the first list 10. The second list 20 is orthogonal to the first list and it depends from the first boundary media content item 12 in the first list 10. In this example, the second list 20 is ordered (in this example top to bottom) according to progression of the second parameter.

At block 308 of the method 300, the apparatus 258 enables user selection of at least a second media content item 22 from the displayed second list 20 of media content items 2.

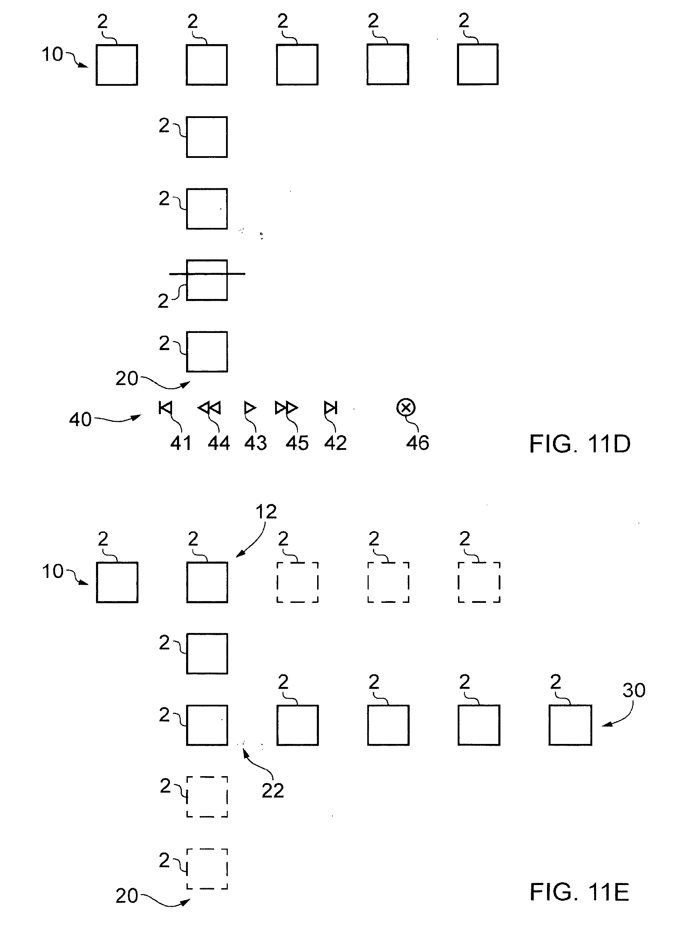

For example, as illustrated in Fig. 11D, a user is able to use controls 40 to select a second media content item 22 from the displayed second list 20 of media content items 2.

In some but not necessarily all examples, a user is able to use controls 40 to play different ones of the media content items 2 within the second list 20 as part of a process selecting the second media content item 22. In other examples, selection may occur without playing media content items 2.

In some but not necessarily all examples, controls 40 comprise multiple controls. One example of multiple controls is illustrated in Fig 11D. A skip-back control 41 allows a user to select a preceding media content item 2 in the second list 20. A skip-forward control 42 allows a user to select a next media content item 2 in the second list 20. A play control 43 allows a user to play the currently selected media content item 2. A scroll-back control 44 allows a user to rewind a currently playing media content item 2 and a scroll-forward command 45 allows a user to fast forward a currently playing media content item 2.

A judgment control 46 is also provided. In this example, the judgment control 46 is a reject control. The user selects this reject control 46, while a media content item 2 is playing, to indicate that the currently playing media content item 2 is a rejected media content item 2 and the user does not wish this rejected media content item 2 (and/or media content items 2 with a similar second parameter value to it ) to be in a desired playlist 222. That is, the selection is used to define, in the direction of the second parameter, the sub-space 52 defining the desired playlist 222. The sub-space 52 may include media content item 2 in the second list 20 that have not been rejected and may exclude media content item 2 in the second list 20 that have been rejected.

Additionally or alternatively, a judgment control 46 may be provided as an approval control. The user selects this approval control 46, while a media content item 2 is playing, to indicate that the currently playing media content item 2 is an accepted media content item 2 and the user does wish this accepted media content item 2 (and/or media content items 2 with a similar second parameter value to it ) to be in a desired playlist 222. That is, the selection is used to define, in the direction of the second parameter, the sub-space 52 defining the desired playlist 222. The sub-space 52 may include media content item 2 in the second list 20 that have been accepted and may exclude media content item 2 in the second list 20 that have not been accepted.

The last media content item 2 in the second list 20 that is not rejected and/or that is approved is a second boundary media content item 22. The second boundary media content item 22 is a specific example of the previously described second media content item 22. It represents an internal boundary of the sub-space 52 defining the desired playlist 222 along the direction of the second parameter.

At block 310 of the method 300, the apparatus 258 enables creation of a playlist 222 of media content items 2 dependent upon at least the user selected first boundary media content item 12 and the user selected second boundary media content item 22.

As explained previously with reference to Figs. 4, 5 and 6, the playlist 222 is dependent upon the sub-space 52. The sub-space 52 is, in turn, dependent at least upon the user selected first boundary media content item 12 and the user selected second boundary media content item 22.

It is possible for method 300 to include additional blocks. It may, for example, enable the definition of a N-parameter sub-space 52, where N>2. For each additional parameter there would be a block causing display, at the user device 100, of an additional list of media content items 2 ordered according to progression of an additional parameter that parameterizes media content items 2 and a block enabling user selection of at least a particular boundary media content item from the displayed additional list of media content items 2. Then at block 310 of the method 300, the apparatus 258 would enable creation of a playlist 222 of media content items 2 dependent upon at least the user selected boundary media content items for each of the different parameters.

Figs. 11E to 11G illustrate an extension of the method 300 to a third parameter.

Referring to Fig. 11E, in response to user selection of the reject control 46, the apparatus 258 automatically causes display, at the user device 100, of a third list 30 of media content items 2.

The third list 30 is ordered according to progression of a third parameter that parameterizes media content items 2. The third parameter is different to the first parameter and different to the second parameter.

In the example of Fig. 11E, the third list 30 is displayed simultaneously with the first list 10 and the second list 20. The relationship between the first list 10 and the second list 20 remains unchanged. However, the third list 30 is orthogonal to the second list 20 and parallel to the first list 10 and it depends from the second boundary media content item 22 in the second list 20. In this example, the third list 30 is ordered (in this example left to right) according to progression of a third parameter that parameterizes media content items 2.

The apparatus 258 may then enable user selection of at least a third boundary media content item 32 from the displayed third list 30 of media content items 2.

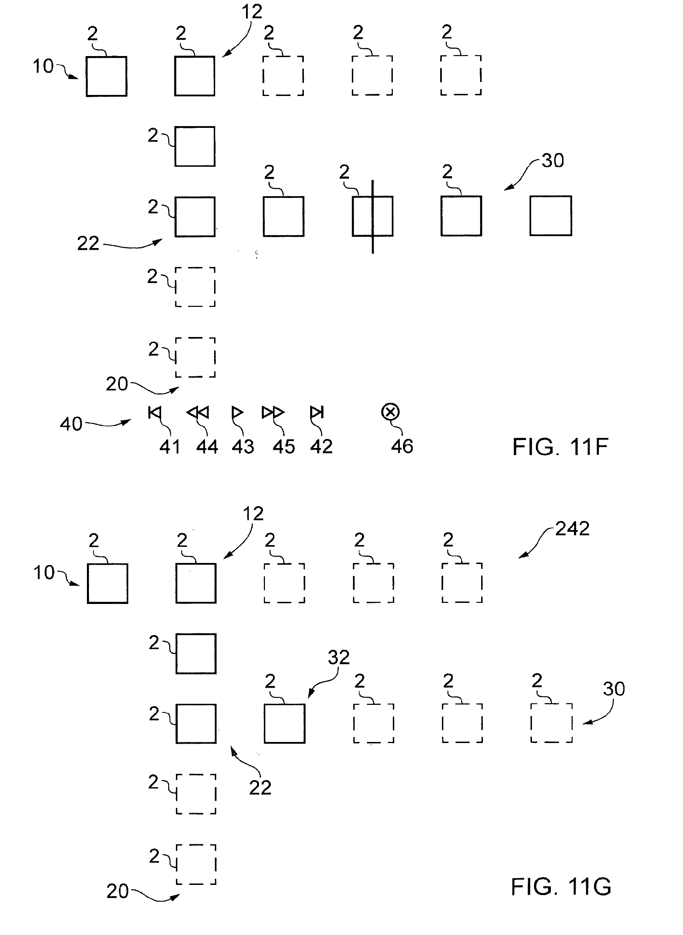

For example, as illustrated in Fig. 11F, a user is able to use controls 40 to select a third media content item 12 from the displayed third list 30 of media content items 2.

In some but not necessarily all examples, a user is able to use controls 40 to play different ones of the media content items 2 within the third list 30 as part of a process selecting the third media content item 32. In other examples, selection may occur without playing media content items 2.

In some but not necessarily all examples, controls 40 comprise multiple controls. One example of multiple controls is illustrated in Fig 11 F.A skip-back control 41 allows a user to select a preceding media content item 2 in the third list 30. A skip-forward control 42 allows a user to select a next media content item 2 in the third list 30. A play control 43 allows a user to play the currently selected media content item 2. A scroll-back control 44 allows a user to rewind a currently playing media content item 2 and a scroll-forward command 45 allows a user to fast forward a currently playing media content item 2.

A judgment control 46 is also provided. In this example, the judgment control 46 is a reject control. The user selects this reject control 46, while a media content item 2 is playing, to indicate that the currently playing media content item 2 is a rejected media content item 2 and the user does not wish this rejected media content item 2 (and/or media content items 2 with a similar third parameter value to it ) to be in a desired playlist 222. That is, the selection is used to define, in the direction of the third parameter, the sub-space 52 defining the desired playlist 222. The sub-space 52 may include media content items 2 in the third list 30 that have not been rejected and may exclude media content item 2 in the third list 30 that have been rejected.

Additionally or alternatively, a judgment control 46 may be provided as an approval control. The user selects this approval control 46, while a media content item 2 is playing, to indicate that the currently playing media content item 2 is an accepted media content item 2 and the user does wish this accepted media content item 2 (and/or media content items 2 with a similar third parameter value to it ) to be in a desired playlist 222. That is, the selection is used to define, in the direction of the third parameter, the sub-space 52 defining the desired playlist 222. The sub-space 52 may include media content item 2 in the third list 30 that have been accepted and may exclude media content item 2 in the third list 30 that have not been accepted.

The last media content item 2 in the third list 30 that is not rejected and/or that is approved is a third boundary media content item 32. The third boundary media content item 32 is a specific example of a third media content item 32. It represents an internal boundary of the sub-space 52 defining the desired playlist 222 along the direction of the third parameter.

In this example, at block 310 of the method 300, the apparatus 258 would enable creation of a playlist 222 of media content items 2 dependent upon at least the user selected first boundary media content item 12, the user selected second boundary media content item 22 and the user selected third boundary media content item 32.

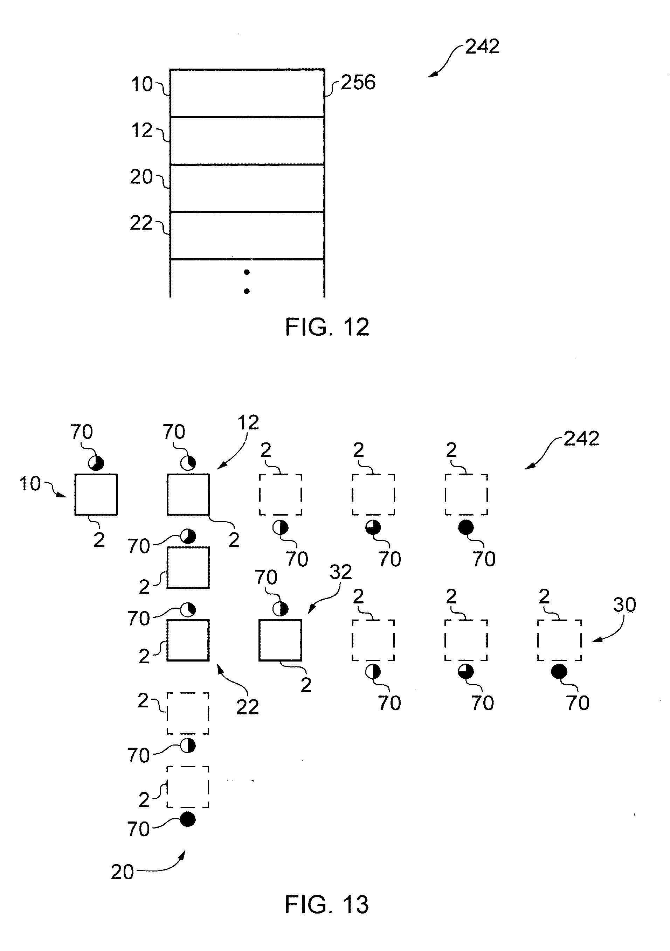

Block 310 of the method 300, Fig 9, may produce as a direct product a data structure 256 that records a playlist seed 242. An example of such a data structure 256 is illustrated in Fig 12. The playlist seed 242 enables the display of a visual representation of the playlist seed 242 for example as illustrated in Fig. 11G or 13. This visual representation may provide a visual indication of the sub-space 52 defining the desired playlist 222. The visual representation may also enable the editing of the playlist seed 242. The data structure 256 may enable the storage of the playlist seed 242 for future review and/or editing and also enable the transfer of the playlist seed 242 to other users, who may review, store, or edit it depending upon implementation.

In the example of Fig. 12, the data structure 256 records, as the playlist seed 242, the first list 10 of media content items 2, and the second list 20 of media content items 2.

It also records the user selected first boundary media content item 12 and the user selected second boundary media content item 22.

It may also comprise additional lists of media content items associated with additional parameters and additional selected boundary media content item(s) from those lists. For example, it may additionally comprise, the third list 30 of media content items 2 and the selected third boundary media content item 32.

Referring to Fig. 11G and 13, the data structure 256 enables simultaneous display of the first list 10 of media content items 2, the second list 20 of media content items 2 and the third list 30 of media content items 2, in this example. In other examples, the third list 30 may be absent.

The first list 10 is ordered (in this example left to right) according to progression of the first parameter.

Those media content items 2 in the first list 10 that are user approved are demarcated from those that are user rejected. In the figure, a solid line indicates user approval and a dotted line indicates user rejection but weightings for the first parameter associated with media content items 2 in the first list 10 may be indicated in other ways, for example as illustrated in Fig. 13.

The second list 20 is orthogonal to the first list 10 and depends from the first boundary media content item 12 in the first list 10. It is ordered (in this example top to bottom) according to progression of the second parameter.

Those media content items 2 in the second list 20 that are user approved are demarcated from those that are user rejected. In the figure, a solid line indicates user approval and a dotted line indicates user rejection but weightings for the second parameter associated with media content items 2 in the second list 20 may be indicated in other ways, for example as illustrated in Fig. 13.

The third list 30 is orthogonal to the second list 20 and parallel to the first list 10. It depends from the second boundary media content item 22 in the second list 20. It is ordered (in this example left to right ) according to progression of the third parameter.

Those media content items 2 in the third list 30 that are user approved are demarcated from those that are user rejected. In the figure, a solid line indicates user approval and a dotted line indicates user rejection but weightings for the third parameter associated with media content items 2 in the third list 30 may be indicated in other ways, for example as illustrated in Fig. 13.

The boundary media content items 12, 22, 32 mark the boundaries for different parameters and demarcate the transition from user-approved to user-rejected. They indicate the boundary in the sub-space 52 for the parameters associated with the first, second and third lists 10, 20, 30 respectively.

It may be possible to edit the data structure 256 that records the playlist seed 242. This will change the visual representation of the playlist seed 242.

For example, referring to Figs. 11G and 13, a user may access the data structure 256 and display a visual representation of the playlist seed 242. The user may then change features of the playlist seed 242. For example, the user may change a parameter, which would result in generation of a new list of media items 2. For example, the user may change a boundary media item 12, 22, 32. For example, as illustrated in Fig. 13, the user may change weightings for parameters associated with different media content items 2.

In Fig. 13, an example of a visual representation of playlist seed 242 is illustrated. The figure is similar to Fig. 11G except that at least some of media content items 2 have associated visual indicators 70, which indicate the weighting associated with that media item. The weighting associated with a media item 2 is in respect of the parameter that defines the list in which that media content 2 item appears.

As explained previously with reference to Fig. 4, the playlist seed 242 may in some examples define the sub-space 52 by defining the dependent parameters that span the sub-space 52 and also define the range of values of those parameters. In other examples, the playlist seed 242 may define the sub-space 52 by defining the dependent parameters that span the sub-space 52 and identify media content items 2 that lie within the sub-space 52 and media content items 2 that lie outside the sub-space 52.

The data structure 256 defining the playlist seed 242 may additionally record that the first list 10 is for the first parameter, that the second list 20 is for the second parameter, etc.

The data structure 256 defining the playlist seed 242 may additionally record weightings for the media content items 2.

A positive weighting for a parameter may indicate that an associated media content item 2 lies within the sub-space 52 in the direction of that parameter. A negative weighting for a parameter may indicate that an associated media content item 2 lies outside the sub-space 52 in the direction of that parameter. A positive weighting may have a different magnitude, with higher values being located towards a center of the sub-space 52 and lower values being located away from the center of the sub-space 52. A negative weighting may have a different magnitude, with higher values being located outside the sub-space 52 and lower values being located at or near the boundary of sub-space 52.

The weightings may be edited or varied and the corresponding indicators 70 will indicate the new weightings.

In Fig. 13, the media content items 2 in the first list 10 have first weightings for the first parameter. The first weightings are dependent upon the selected first boundary media content item 12. The first weightings may be initially automatically allocated but may also be user allocated and/or user adjustable. The visual indicators 70 indicate the first weightings, which are unequal.

The first boundary media content item 12 may, for example have a positive weighting for the first parameter. Those neighboring media content items 2 that precede the first boundary media content item 12 may, for example have positive weightings for the first parameter, possibly of different magnitude to each other and the first boundary media content item 12. Those neighboring media content items 2 that follow the first boundary media content item 12 may, for example have negative weightings for the first parameter, possibly of different magnitude to each other.

In Fig. 13, the media content items 2 in the second list 10 have second weightings for the second parameter. The second weightings are dependent upon the selected second boundary media content item 22. The second weightings may be initially automatically allocated but may also be user allocated and/or user adjustable. The visual indicators 70 indicate the second weightings, which are unequal.

The second boundary media content item 22 may, for example have a positive weighting for the second parameter. Those neighboring media content items 2 that precede the second boundary media content item 22 may, for example have positive weightings for the second parameter, possibly of different magnitude to each other and the second boundary media content item 22. Those neighboring media content items 2 that follow the second boundary media content item 22 may, for example have negative weightings for the second parameter, possibly of different magnitude to each other.

In Fig. 13, the media content items 2 in the third list 30 have third weightings for the third parameter. The third weightings are dependent upon the selected third boundary media content item 32. The third weightings may be initially automatically allocated but may also be user allocated and/or user adjustable. The visual indicators 70 indicate the third weightings, which are unequal.

The third boundary media content item 32 may, for example have a positive weighting for the third parameter. Those neighboring media content items 2 that precede the third boundary media content item 32 may, for example have positive weightings for the third parameter, possibly of different magnitude to each other and the third boundary media content item 32. Those neighboring media content items 2 that follow the third boundary media content item 32 may, for example have negative weightings for the third parameter, possibly of different magnitude to each other.

The positive weightings may increase and then decrease with distance of an associated media item 2 from a selected boundary media item in the same list and/or the negative weightings may become more negative with distance of an associated media content item 2 from the selected the selected boundary media content item in the same list.

The weightings will also be recorded in the data structure 256 defining the playlist seed 242. The playlist seed 242 enables creation of a playlist 222 of media content items 2 dependent upon weightings for the different parameters of the sub-space 52.

As explained above, a playlist seed 242 will typically define a playlist 222 by defining the dependent parameters that span the space 50 and then defining, implicitly or explicitly, ranges/weightings for those dependent parameters that define the sub-space 52.

It will be appreciated from the foregoing that there is a co-dependency between the first parameter and the first list 10, between the second parameter and the second list and between the Nth parameter and the Nth list. A parameter may be used to originate a list ordered according to progression of that parameter or a list may be used to originate a parameter.

For example, in some embodiments, a particular parameter may be used to generate a list of media content items that is ordered according to progression of that parameter.

In other examples, a collection of media content items may be analyzed to identify a particular parameter that produces within the collection or a sub-set of the collection a list of media content items 2 that is ordered according to progression of that parameter.

In some but not necessarily all embodiments, the apparatus 258 enables explicit user selection of a parameter, which is then used to generate a list that is ordered according to progression of that parameter. For example, the user may define none, some or all of the first parameter, the second parameter and the third parameter.

In some but not necessarily all embodiments, the apparatus 258 enables implicit user selection of a parameter, which is used to generate a list that is ordered according to progression of that parameter. For example, the user may define a collection of content media items 2 that are analyzed to identify a particular parameter that produces within the collection or a sub-set of the collection a list of media content items 2 that is ordered according to progression of that parameter.

In some but not necessarily all embodiments, the apparatus 258 enables an automated selection of none, some or all of the first parameter, the second parameter and the third parameter.

For example, the automated selection may be or comprise a random selection of parameters.

For example, the automated selection may be or comprise a user-profile based selection of parameters. For example, a parameter may be selected based on a history of the user's consumption of media content items.

For example, the automated selection may be or comprise a contextual based selection of parameters chosen, for example, according to the user's mood, environment or activity.

In may also be desirable in some but not necessarily all embodiments, for the apparatus 258 to enable user selection of the order in which parameters are used to generate lists of media content items 2 that are ordered according to progression of the parameters.

In may also be desirable in some but not necessarily all embodiments, for the apparatus 258 to enable automated selection of the order in which parameters are used to generate lists of media content items 2 that are ordered according to progression of the parameters.

For example, parameters may be ranked by importance and used in that order or presented to a user in that order for selection. The order may be determined by finding the dimensions (in order) that span most effectively a target vector space. Principal component analysis (PCA) may be used for example.

It will be appreciated that the boundary media content items 12, 22 etc, define nodes that interlink different lists 10, 20 etc. The first media content item can therefore be parameterized according to the first parameter because it is in the first list 10 and also parameterized according to the second parameter because it is in the second list 20. The first media content item 12 may therefore be used to identify a suitable second parameter. For example, after user selection of the first media content item 12, the apparatus 258 may cause an algorithm to search for parameters that span most effectively a target vector space (e.g. a collection of media content items) and for which the first media content item 12 has a conservative value. A conservative value may be a value that does not represent an extreme of the target vector space. A conservative value may be associated with a region about which there is some clustering of media content items 2 in the vector space. A conservative value may be associated with a region about which there is clustering of media content items 2 previously consumed by the user.

Thus, a m ^{th} media content item may therefore be used to identify a suitable m+1 ^{th} parameter, which is then used to generate the m+1 ^{th} list of media content items ordered according to progression of the m+1 ^{th} parameter.

Also, the m+1 ^{th} parameter, which is used to generate the m+1 ^{th} list of media content items, may be dependent on media content items 2 in the vector space.

In the preceding description, a first list 10 of media content items 2 has been described as ordered according to progression of a first parameter. That is the first list 10 is defined by a dominant progressive parameter (the first parameter) that drives the progression of the first list 10 from media content item 2 to next media content item 2. Each of the Nth lists is defined by a dominant progressive parameter (the Nth parameter).

It may be appropriate when controlling how a list is generated from a parameter to control a rate at which the dominant progressive parameter progresses i.e. control the difference in the Nth parameter between neighboring media content items 2 in the Nth list. The dominant progressive parameter may, for example, progress monotonically (e.g. increase but not decrease/ decrease but not increase). In some but not necessarily all examples, the progression rate of the dominant progressive parameter may, for example, be constant or monotonic (e.g. increase but not decrease/ decrease but not increase).

It may be appropriate when controlling how a list is generated from a dominant progressive parameter to control a rate at which parameters other than the dominant progressive parameter progress, so that, for example, they do not progress or progress less quickly than the dominant progressive parameter.

It may be appropriate when controlling how a list is generated from a dominant progressive parameter to constrain parameters other than the dominant progressive parameter (constraining parameters) so that they lie within a defined constraining range, which may be a narrow range. It may be appropriate when controlling how a list is generated from a dominant progressive parameter for the constraining parameter(s) to be randomly distributed within the constraining range so that they do not progress in the generated ordered list based on the dominant progressive parameter.

The apparatus 258 may be configured to determine the constraining parameter or constraining parameters and the respective constraining ranges by analyzing a history of media content items consumed by the user or a user identified as similar to the user. For example, a constraining parameter may be a parameter that does not vary a lot from media content item to media content item within a history of user media items 2 consumed by the user. The constraining range may be a range within which the constraining parameter varies during a history of user media items consumed by the user.

In the preceding examples described with reference to Figs 1 to 13, the media content items 2 may comprise or consist of audio tracks and the plurality of parameters may parameterize the audio tracks.

Parameters that may be used to parameterize audio or music tracks include, but are not limited to: parameters characterizing different genres of music; parameters characterizing different moods of music; parameters characterizing different tempos of music; parameters characterizing different keys; parameters characterizing different tones; parameters characterizing different energy; parameters characterizing different loudness; parameters characterizing different roughness; parameters characterizing different brightness; parameters characterizing different styles of music; parameters characterizing different rhythm etc

In the preceding examples described with reference to Figs 1 to 13, the media content items 2 may comprise or consist of video and the plurality of parameters may parameterize the video. Parameters that may be used to parameterize video include, but are not limited to: classification, genre, leading actors, director, writer, date of release etc

Parameters that may be used to parameterize photographs include, but are not limited to: time of day taken, time of year taken, location taken, blue hue saturation, green hue saturation, dominance of faces, dominance of particular faces,

A parameter may be any content descriptive parameter depending on the media type, such as brightness, sharpness, saturation, amount of objects, fullness, etc.

A parameter may have values on a continuous scale or may have a set of discrete values.

From the foregoing, it will therefore be appreciated that the user device 100 is configured to:
display a first list 10 of media content items 2 to a user, wherein the first list is ordered according to progression of a first one of a plurality of parameters that parameterize media content items 2;
provide for user selection of at least a first media content item 12 from the displayed first list 10 of media content items 2;
display of a second list 20 of media content items 2 to the user wherein the second list 20 is ordered according to progression of a second one of the plurality of parameters that parameterize media content items 2;
provide for user selection of at least a second media content item from the displayed second list of media content items.
This may occur to create a data structure 256 defining the playlist seed 242 or edit the data structure 256 defining the playlist seed 242.

The creation of a playlist 222 of media content items 2 dependent upon the playlist seed 242 may occur at the user device 100 (Fig. 3) or at a network device (Figs. 1 and 2).

From the foregoing it will be appreciated that an apparatus, for example an apparatus 258, 100, 102 may comprise:
means for causing display of a first list 10 of media content items 2 to a user, wherein the first list 10 is ordered according to progression of a first one of a plurality of parameters that parameterize media content items 2;
means for enabling user selection of at least a first media content item 12 from the displayed first list 10 of media content items;
means for causing display of a second list 20 of media content items 2 to the user wherein the second list 20 is ordered according to progression of a second one of the plurality of parameters that parameterize media content items 2;
means for enabling user selection of at least a second media content item 22 from the displayed second list 20 of media content items 2; and
means for enabling creation of a playlist 222 of media content items 2 dependent upon at least a user selected first media content item 12 and a user selected second media content item 22.

From the foregoing it will be appreciated that an apparatus, for example an apparatus 258, 100, 102 may comprise:
at least one processor 250; and
memory 252 storing computer program code 254 configured, working with the at least one processor 250, to cause at least the following to be performed:
   causing display of a first list 10 of media content items 2 to a user, wherein the first list 10 is ordered according to progression of a first one of a plurality of parameters that parameterize media content items 2;
   enabling user selection of at least a first media content item 12 from the displayed first list 10 of media content items 2;
   causing display of a second list 20 of media content items 2 to the user, wherein the second list 20 is ordered according to progression of a second one of the plurality of parameters that parameterize media content items;
   enabling user selection of at least a second media content item 22 from the displayed second list 20 of media content items 2;
   enabling creation of a playlist 222 of media content items 2 dependent upon at least a selected first media content item 12 and a selected second media content item 22.

References to 'computer-readable storage medium', 'computer program product', 'tangibly embodied computer program' etc. or a 'controller', 'computer', 'processor' etc. should be understood to encompass not only computers having different architectures such as single/multi-processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' refers to all of the following:
(a) hardware-only circuit implementations (such as implementations in only analog and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and
(c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

The blocks illustrated in the Fig. 9 may represent steps in a method and/or sections of code in the computer program code 254. The illustration of a particular order to the blocks does not necessarily imply that there is a required or preferred order for the blocks and the order and arrangement of the block may be varied. Furthermore, it may be possible for some blocks to be omitted.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".
In this brief description, reference has been made to various examples. The description of features or functions in relation to an example indicates that those features or functions are present in that example. The use of the term 'example' or 'for example' or 'may' in the text denotes, whether explicitly stated or not, that such features or functions are present in at least the described example, whether described as an example or not, and that they can be, but are not necessarily, present in some of or all other examples. Thus 'example', 'for example' or 'may' refers to a particular instance in a class of examples. A property of the instance can be a property of only that instance or a property of the class or a property of a subclass of the class that includes some but not all of the instances in the class. Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features of the invention believed to be of particular importance it should be understood that the applicant claims protection in respect of any patentable feature or combination of features hereinbefore referred to and/or shown in the drawings whether or not particular emphasis has been placed thereon.

## Claims

1. A method comprising:
causing display of a first list of media content items to a user, wherein the first list is ordered according to progression of a first one of a plurality of parameters that parameterize media content items;
enabling user selection of at least a first media content item from the displayed first list of media content items;
causing display of a second list of media content items to the user, in response to user selection of the first media content item, wherein the second list is ordered according to progression of a second one of the plurality of parameters that parameterize media content items;
enabling user selection of at least a second media content item from the displayed second list of media content items; and
enabling creation of a playlist of media content items dependent upon at least a user selected first media content item and a user selected second media content item.

2. A method as claimed in claim 1, further comprising causing simultaneous display of the first list of media content items and the second list of media content items, wherein the second list of media content items depends from the selected first media content item in the first list of media content items.

3. A method as claimed in claim 1 or 2, comprising:
enabling creation of a playlist of media content items dependent upon weightings associated with one or more media content items in the first list of media content items and one or more media content items in the second list of media content items, and
causing simultaneous display of the first list of media content items, the second list of media content items and visual indicators indicating the weightings.

4. A method as claimed in claim 3, comprising enabling user adjustment of the weightings.

5. A method as claimed in any preceding claim, comprising
enabling creation of a playlist of media content items dependent upon first weightings for the
first parameter and second weightings for the second parameter, wherein the first weightings are dependent upon the selected first media content item and the second weightings are dependent upon the selected second media content item.

6. A method as claimed in claim 5, wherein the first weightings are unequal and dependent upon the selected first media content item and at least neighboring media content items to the selected first media content item in the first list of media content items.

7. An apparatus as claimed in claim 6,
wherein neighboring media content items that precede the selected first media content item in the first list provide positive weightings and neighboring media content items that follow the selected first media content item in the first list provide negative weightings.

8. A method as claimed in any preceding claim, comprising
producing as a direct product a data structure that records at least the first list of media content items, the selected first media content item, the second list of media content items, and the selected second media content item and that enables simultaneous display of
the first list of media content items and the second list of media content items, wherein at least the selected first media content item is identified in the first list.

9. A method as claimed in any preceding claim, comprising:
creating as a direct product a playlist of media content items dependent upon at least a user selected first media content item and a user selected second media content item.

10. A method as claimed in any preceding claim, wherein the media content items are
audio tracks and wherein the plurality of parameters parameterize the audio tracks.

11. A method as claimed in any preceding claim, comprising:
enabling selection of the first one of the plurality of parameters and/or selection of the second one of the plurality of parameters.

12. A method as claimed in any preceding claim, comprising:
in response to user selection of the second media content item, causing display of a third list of media content items to the user, wherein the third list is ordered according to progression of a third one of the plurality of parameters that parameterize media content items; and
enabling user selection of at least a third media content item from the displayed third list of media content items;
wherein enabling creation of a playlist of media content items is dependent upon at least the selected first media content item, the selected second media content item and the selected third media content item.

13. An apparatus, comprising:
means for causing display of a first list of media content items to a user, wherein the first list is ordered according to progression of a first one of a plurality of parameters that parameterize media content items;
means for enabling user selection of at least a first media content item from the displayed first list of media content items;
means for causing display of a second list of media content items to the user,
wherein the second list is ordered according to progression of a second one of the plurality of parameters that parameterize media content items;
means for enabling user selection of at least a second media content item from the displayed second list of media content items; and
means for enabling creation of a playlist of media content items dependent upon at least a user selected first media content item and a user selected second media content item.

14. An apparatus as claimed in claim 13 further comprising means for performing the method of any of claims 2 to 12.

15. A computer program which when run by a computer enables the method of any of claims 1 to 12 or the apparatus of claim 13 or 14.
